# EUROPEAN PATENT SPECIFICATION

(11) **EP 0 395 183 B1**
(45) Date of publication and mention of the grant of the patent: **13.07.1994**
(21) Application number: 90201068.5
(22) Date of filing: 26.04.1990
(51) Int. Cl.: C08K 13/02, C08L 73/00

(54) **Polyketone polymer compositions**
Polyketonpolymerzusammensetzungen
Compositions de polymères de polycétones

(30) Priority: 27.04.1989 US 343770; 20.07.1989 US 382380
(43) Date of publication of application: 31.10.1990
(73) Proprietor: SHELL INTERNATIONALE RESEARCH MAATSCHAPPIJ B.V., 2596 HR Den Haag (NL)
(72) Inventor: Klingensmith, George Bruce, Houston, Texas 77098 (US)

(56) References cited:
- EP-A- 0 288 124
- US-A- 3 242 132

## Description

This invention relates to certain polyketone polymer compositions, that is, comprising a linear alternating copolymer of carbon monoxide and at least one ethylenically unsaturated compound.

The class of polymers of carbon monoxide and olefin(s) has been known for some time.

More recently, the class of linear alternating polymers of carbon monoxide and at least one ethylenically unsaturated compound has become of greater interest. More recent processes for the production of these polymers, also known as polyketones or polyketone polymers, are illustrated by, for example, European Patent Applications Nos. 121,965, 181,014, 213,671 and 257,633. The process generally involves the use of a catalyst formed from a Group VIII metal selected from palladium, cobalt or nickel, the anion of a non-hydrohalogenic acid having a pKa below about 6, preferably below 2, and a bidentate ligand of phosphorous, arsenic, antimony or nitrogen.

The resulting polymers are relatively high molecular weight materials having utility as premium thermoplastics in the production of shaped articles by methods conventional for the processing of thermoplastics. Although the polymers are relatively stable, the linear alternating polymers do undergo to some degree the degradation by exposure to elevated temperatures and to ultraviolet light characteristic of most if not all organic polymers.

In EP-A-288,124 a class of stabilizers useful to retard the degradation by UV light of the linear alternating polymers of carbon monoxide and at least one ethylenically unsaturated compound is disclosed. Among the members of this class are diphenylamines of defined structure, including 4,4′-bis(α,α-dimethylbenzyl)diphenyl amine, a commercial antioxidant. Although the use of this and related diphenylamines is useful in retarding degradation caused by exposure to UV light, it would be of advantage to provide improved UV stabilization.

It has now been found that the additional presence of a particular type of carbon black synergistically improves the stabilization provided by diphenylamines. It has been found furthermore, that the synergistic effect of the carbon black extends to thiobisphenols.

Accordingly, the present invention provides a polyketone polymer composition which comprises a linear alternating copolymer of carbon monoxide and at least one ethylenically unsaturated compound, and a stabilizing quantity of (a) a diphenylamine and/or a thiobisphenol, and (b) a weakly acidic channel-type carbon black.

The ethylenically unsaturated compounds useful as precursors of the polyketone polymers, are in particular hydrocarbons which have up to 20 carbon atoms inclusive, preferably up to 10 carbon atoms, and which are aliphatic such as ethylene and other α-olefins including propylene, 1-butene, isobutylene, 1-octene and 1-dodecene or are arylaliphatic having an aryl substituent on an otherwise aliphatic molecule, particularly an aryl substituent on a carbon atom of the ethylenic unsaturation. Examples of this latter class of ethylenically unsaturated hydrocarbons include styrene, p-methylstyrene, p-ethylstyrene and m-isopropylstyrene. Preferred polyketone polymers are copolymers of carbon monoxide and ethylene or terpolymers of carbon monoxide, ethylene and a second hydrocarbon of at least 3 carbon atoms, particularly an α-olefin such as propylene. Ethylenically unsaturated compounds containing heteroatoms in addition to carbon and hydrogen, are feasible too, e.g. acrylates.

When the preferred terpolymers of carbon monoxide, ethylene and a second hydrocarbon are employed, there will be at least two units incorporating a moiety of ethylene for each unit incorporating a moiety of the second hydrocarbon. Preferably, there will be from 10 units to 100 units incorporating a moiety of ethylene for each unit incorporating a moiety of the second hydrocarbon. The polymer chain of the preferred polymers is therefore represented by the repeating formula 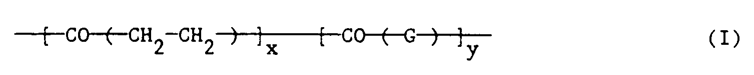
wherein G is the moiety of the second hydrocarbon polymerised through the ethylenic unsaturation thereof. The -CO(̵CH₂-CH₂)̵ units and the -CO(̵G)̵ units are formed randomly throughout the polymer chain and the ratio of y:x is no more than 0.5. In the modification of the invention where copolymers of carbon monoxide and ethylene without the presence of a second hydrocarbon are employed, the polymers are represented by the above formula I wherein y is 0. When y is other than 0, i.e., terpolymers are employed, the preferred ratios of y:x are from 0.01 to 0.1. The end groups or "caps" of the polymer chain will depend on what materials are present during the production of the polymer and how or whether the polymer is purified. The precise nature of the end groups is of little apparent significance so far as the overall properties of the polymers are concerned so that the polymers are fairly represented by the polymer chains as depicted above.

Of particular interest are the polymers of number average molecular weight from 1000 to 200,000, particularly those polymers molecular weight from 20,000 to 90,000, as determined by gel permeation chromatography. The physical properties of the polymers will depend in part upon the molecular weight, whether the polymer is a copolymer or a terpolymer and, in the case of terpolymers, the nature of and the proportion of the second unsaturated compound. Typical melting points for such polymers are from 175 °C to 300 °C, more frequently from 210 °C to 270 °C. The polymers will have a limiting viscosity number (LVN), when measured in m-cresol at 60 °C, of from about 0.5 to about 10, preferably from 0.8 to 4.

The polymers are obtainable by the general methods of the above mentioned European Patent Applications.

The polyketone polymers of the invention are stabilized against degradation caused by exposure to ultraviolet light by incorporation therein of a stabilizing amount of a synergistic combination of a diphenylamine and/or thiobisphenol, and a particular form of carbon black. While the theory by which the polyketone polymer is protected against such degradation is not completely understood, it is apparent that the combination with the particular carbon black provides better protection than the additive effect of the individual components or similar combinations which contain other forms of carbon black.

The diphenylamine component of the stabilizer package has two aromatic ring systems individually bonded to a nitrogen atom additionally containing a hydrogen substituent. Each aromatic ring system may have up to 30 carbon atoms inclusive, preferably up to 20 carbon atoms inclusive, and up to 2 aromatic rings inclusive. Each aromatic ring system individually is hydrocarbon containing only atoms of carbon and hydrogen or is substituted hydrocarbon additionally containing other inert atoms or groups of atoms, for example, halogen atoms such as chlorine or bromine. A preferred class of diphenylamines is represented by the formula 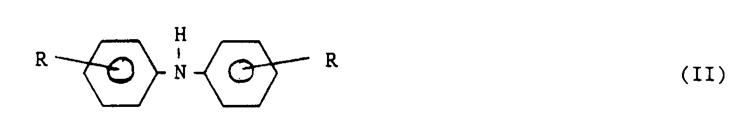
wherein each R individually is alkyl of up to 12 carbon atoms, phenyl or benzyl having up to 2 alkyl substituents of up to 8 carbon atoms inclusive on the benzylic or methylene carbon atom. Illustrative of such diphenylamines are diphenylamine, di(4-methylphenyl)amine, di(4-benzylphenyl)amine, 4,4′-bis(α,α-di-n-propylbenzylphenyl)amine, di(4-α-ethylbenzyl)diphenylamine, di(4-phenylphenyl)amine, 4-propylphenyl 4-phenylphenyl amine, di(3-nonylphenyl)amine, 4,4′-bis(α,α-dimethylbenzyl)diphenylamine and 4-benzylphenyl 4-phenylphenyl amine. Particularly preferred are the diphenylamines of the above formula II wherein at least one R is n-alkyl of from 6 to 10 carbon atoms inclusive or α,α-dimethylbenzyl. Especially preferred as the diphenylamine component of the stabilizer is 4,4′-bis(α,α-dimethylbenzyl)diphenylamine.

The thiobisphenol component of the stabilizer package is a compound having two hydroxyphenyl, preferably two 4-hydroxyphenyl, groups connected by a sulphur atom, wherein preferably both hydroxyl groups are sterically hindered by the presence of a bulky substituent on at least one carbon atom ortho to the ring carbon atom on which the hydroxyl group is substituted. A preferred class of thiobisphenols is thus represented by the formula 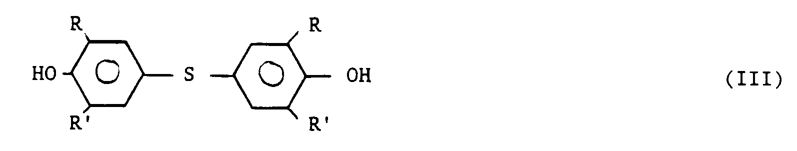
wherein each R independently is secondary or tertiary alkyl of from 3 to 8 carbon atoms inclusive, preferably from 3 to 5 carbon atoms, and each R' independently is alkyl of up to 8 carbon atoms inclusive. Illustrative of suitable R groups are isopropyl, sec-butyl, t-butyl, sec-amyl and t-amyl. R' groups are branched or are straight chain alkyl groups, e.g., methyl, ethyl, isopropyl, t-butyl, 2-hexyl or octyl. In preferred embodiments of the thiobisphenol, however, each R' group is R. Suitable thiobisphenol components of the compositions of the invention include di(4-hydroxy-3-methyl-5-t-butylphenyl)sulphide, bis(4-hydroxy-3,5-di-t-butylphenyl)sulphide and bis(4-hydroxy-3,5-di-sec-amylphenyl-) sulphide. Preferred as the thiobisphenol component is bis(4-hydroxy-3,5-di-t-butylphenyl)sulphide.

The carbon black which is usefully employed as a component of the stabilizer is a type channel-type carbon black. The particular type of carbon black that is effective in the synergistic stabilizer combinations of the invention is characterized as being weakly acidic. Other forms of carbon black that are more acidic, neutral or weakly basic do not exhibit synergism and impart only minor photoprotection through the screening out of incident ultraviolet radiation. The term carbon black is generic for a class of finely divided carbonaceous products resulting from pyrolysis of hydrocarbon gases or oils. Carbon blacks typically have particle sizes in the range of from about 100 Å to 5000 Å and surface areas of from about 6 m²/g. The carbon content ranges from about 83% to about 99%. Channel-type carbon blacks result when natural gas with or without oil vapours is burned in a multitude of small flames which impinge on a channel surface by methods well known in the art of manufacturing carbon blacks. The channel carbon blacks are among the most finely divided carbon black with particle sizes generally less than 500 Å, e.g., from about 100 Å to about 450 Å. The materials present in such a carbon blacks other than carbon will depend upon what additional materials are present in the gas and/or oil undergoing combustion and whether or not the carbon black receives a post treatment. The carbon blacks may have, in addition to carbon, amounts of hydrogen, oxygen, sulphur and heavy metals chemically combined within the crystalline structure. When a gas/oil mixture is employed in the production of a carbon black which contained chemically combined sulphur, the carbon black product will also have sulphur within the structure of the carbon black. The channel-type carbon blacks useful in the compositions of the invention are weakly acidic, that is, showing a pH above about 3, preferably of from 3.5 to 6.5, more preferably from 4 to 5. The precise nature of the role of pH in the chemistry of photo-stabilization is not known with certainty but the chemistry of aliphatic ketones is often sensitive to pH, showing bell-shaped or inverted bell-shaped responses in reaction rates influenced by pH. The production of such channel-type, weakly acidic carbon blacks is known in the art and certain of the carbon blacks of this type are available commercially.

The mixture of the diphenylamine and/or thiobisphenol and the carbon black is employed in a stabilizing quantity. The diphenylamine and/or thiobisphenol component is suitably present in an amount of 0.01 to 10% by weight based on the polymer to be stabilized, preferably 0.05-5% and in particular 0.1-3% by weight on the same basis. The quantity of the weakly acidic carbon black to be utilized may range from e.g. 0.5% by weight to 10% by weight based on total polymer to be stabilized, but preferably from 1% by weight to 5% by weight on the same basis.

The diphenylamine and/or thiobisphenol and the carbon black components of the stabilizer package are added to the polymer by conventional methods suitable for forming an intimate mixture of the polymer and the UV stabilizer components. Such methods include dry blending of the polymer and stabilizer components in a finely divided form followed by hot pressing or by extrusion of the mixture. Alternatively, the stabilized composition is formed by blending the components in a mixer or blender operating at high shear. The stabilized composition may also include other components such as antioxidants, colorants, plasticizers, fibers and dyes which are added to the polymer together with or separately from the UV stabilizer components. In a preferred embodiment, the polyketone polymer is additionally stabilized against oxidative deterioration by the inclusion therein of a hindered phenolic compound and a variety of commercial antioxidants are useful for this purpose.

The stabilized polyketone compositions are useful in the manufacture of fibers, sheets, films, laminates, containers and wire and cables of established utility which are produced by conventional methods such as melt-spinning, extrusion, injection molding and thermoforming. The compositions are particularly useful in applications where the finished product is likely to be exposed directly to ultraviolet light such as structural parts used in construction or parts produced for external automotive applications.

The invention is further illustrated by the following Examples which should not be construed as limiting the invention.

### EXAMPLE 1

A. A terpolymer of carbon monoxide, ethylene and propylene was produced in the presence of a catalyst formed from palladium acetate, trifluoroacetic acid and 1,3-bis[di(2-methoxyphenyl)phosphino]propane. This polymer, termed Polymer A, had a melting point of 219 °C and an LVN of 1.72, measured in m-cresol at 60°C.
   A second polymer was produced employing the same catalyst composition. This polymer, termed Polymer B, had a melting point of 220 °C and a LVN of 1.8, measured in m-cresol at 60 °C.
   Each polymer contained about 1% of commercial hindered phenolic antioxidants to provide background oxidative stabilization.
B. Samples of compositions comprising Polymer A or Polymer B containing candidate UV stabilizers were prepared by mixing the components and hot pressing test specimens of 0.25 mm in thickness. The specimens were subjected to diurnal UV-A irradiation at 40 °C in air and periodically a sample was withdrawn and evaluated by ZGL tensile testing.
   The ZGL procedure employs a testing device which includes a pneumatic drive, a piezoelectric transducer and automatic data acquisition and analysis. An environmental chamber controls the relative humidity and temperature during testing. The ends of a notched test specimen are separated at a constant rate, e.g., at speeds up to 125 m/min. Local strain rates are produced in the ZGL test specimens which are comparable to those in the first incremental deformation at the notch during a conventional Izod test. In the ZGL version of the notched Izod test, the selected velocity is maintained throughout the test which makes the ZGL test more severe. Thus, the values obtained are somewhat lower than conventional notched Izod values but are valid for comparison of toughness among various materials.
   In Table I, data are provided to measure loss of toughness for Polymer A, a composition comprising polymer A and 1.8% by weight of a stabilizer package containing N,N′-bis[3-(4-hydroxy-3,5-di-t-butylphenyl)propanoyl]hydrazine, 1,2-bis[3-(4-hydroxy-3,5-di-6-butylphenyl)alkanoyloxy)ethane and 4,4′-bis(α,α-dimethylbenzyl)diphenyl amine, a composition containing Polymer A and 3% by weight of a channel-type carbon black containing 8.9% sulphur (Printex 140, Trademark) and a composition comprising Polymer A, 1.8% of the additive package and 3% of the carbon black. In these and subsequent compositions containing the additive package, sufficient additive package was provided to give a concentration of 0.49% by weight of 4,4′-bis(α,α-dimethylbenzyl)diphenyl amine. In each case, the ZGL impact in kg/m² was measured as a function of irradiation time.

**TABLE I**

| Sample | ZGL Impact | | | | |
|---|---|---|---|---|---|
| | 0 hrs | 20 hrs | 25 hrs | 50 hrs | 225 hrs |
| Polymer A | 37 | 2 | 1 | -- | -- |
| Polymer A + package | 72 | 3 | 2 | -- | -- |
| Polymer A + carbon black | 57.5 | 5 | 2 | -- | -- |
| Polymer A + package + carbon black | 74 | 52 | 50 | 35 | 19 |

### EXAMPLE 2

By a procedure similar to that of Example 1, samples were evaluated comprising Polymer B, Polymer B plus 0.5% 4,4′-bis(α,α-dimethylbenzyl)diphenyl amine and Polymer B plus 0.5% 4,4′-bis(α,α-dimethylbenzyl)diphenyl amine and 3% of the carbon black used in Example 1. The results are shown in Table II.

**TABLE II**

| Sample | ZGL Impact | | | |
|---|---|---|---|---|
| | 0 hrs | 10 hrs | 25 hrs | 100 hrs |
| Polymer B | 32 | 3 | 1 | -- |
| Polymer B + diphenylamine | 32 | 5 | 1 | -- |
| Polymer B + diphenylamine + carbon black | 32 | 9 | 9 | 9 |

### EXAMPLE 3

Samples of a polyketone polymer containing 3% by weight of various commercial carbon blacks, 0.5% by weight of 4,4′-bis(α,α-dimethylbenzyl)diphenyl amine, 0.5% by weight of N,N′-bis[3-(4-hydroxy-3,5-di-t-butylphenyl)propanoyl]hydrazine and 0.5% by weight 1,2-bis[3-(4-hydroxy-3,5-di-6-butylphenyl)alkanoyloxy)ethane, were evaluated by a procedure similar to that of Example 1 to determine the time, in hours, to embrittlement of the samples. The results are shown in Table III.

**TABLE III**

| | | | |
|---|---|---|---|
| Carbon Black (Trademark) | Printex 140B | Raven 570 | Sterling NS |
| Type of Carbon Black | channel | furnace | furnace |
| pH of Carbon Black | 4.0 | 2.5 | 8.5 |
| Time to Embrittlement, hrs | 300 | 24 | 64 |

### EXAMPLE 4

By a procedure similar to that of Example 1, samples were evaluated comprising Polymer A, Polymer A plus 3 %w of the carbon black used in Example 1, and Polymer A plus 3 %w of the said carbon black and 0.5 %w of bis(4-hydroxy-3,5-di-tert.butylphenyl)sulphide. The results are shown in Table IV.

**TABLE IV**

| Sample | ZGL Impact | | | |
|---|---|---|---|---|
| | 0 hrs | 5 hrs | 15 hrs | 24 hrs |
| Polymer A | 37.5 | 17 | 3 | 1 |
| Polymer A + carbon black | 47.5 | 58 | 23 | 2.5 |
| Polymer A + carbon black + thiobisphenol | 43 | 59 | 32 | 20 |

### EXAMPLE 5

A linear alternating terpolymer of carbon monoxide, ethylene and propylene which had a melting point of 221 °C and an LVN of 1.88 dl/g (measured at 60 °C in m-cresol) was produced and named "Polymer C". By the procedure of Example 1, specimens were produced and evaluated of Polymer C and of Polymer C plus 0.5% by weight of bis(4-hydroxy-3,5-tert.butylphenyl)sulphide. The results are shown in Table V.

**TABLE V**

| Sample | ZGL Impact | | |
|---|---|---|---|
| | 0 hrs | 8 hrs | 16 hrs |
| Polymer C | 45.5 | 1.0 | 0.5 |
| Polymer C + thiobisphenol | 23.5 | 2.0 | 1.0 |

## Claims

1. Polyketone polymer composition which comprises a linear alternating copolymer of carbon monoxide and at least one ethylenically unsaturated compound, and a stabilizing quantity of a mixture of (a) a diphenylamine and/or a thiobisphenol, and (b) a weakly acidic channel-type carbon black having a pH above 3.

2. A composition as claimed in claim 1, wherein the polymer is represented by the repeating formula 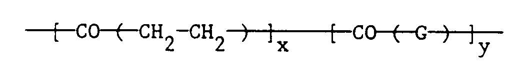 wherein G is the moiety of an ethylenically unsaturated hydrocarbon of at least 3 carbon atoms polymerized through the ethylenic unsaturation and the ratio of y:x is no more than 0.5.

3. A composition as claimed in claim 1 or 2, wherein the diphenylamine and/or thiobisphenol is present in a quantity from 0.05% by weight to 5% by weight based on the polymer to be stabilized.

4. A composition as claimed in any one of claims 1-3, wherein the carbon black has a pH from 3.5 to 6.5 and the carbon black is present in a quantity of from 0.5% to 10% by weight, based on the polymer to be stabilized.

5. A composition as claimed in any of claims 1-4, wherein the diphenylamine is 4,4'-bis(α,α-dimethylbenzyl)diphenylamine.

6. A composition as claimed in any of claims 1-5, wherein the thiobisphenol is of the formula 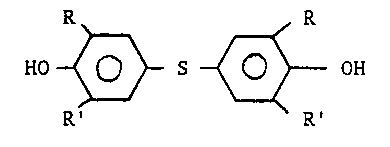 wherein R independently is secondary or tertiary alkyl of from 3 to 8 carbon atoms inclusive, and R' independently is alkyl of up to 8 carbon atoms inclusive.

7. A composition as claimed in claim 6, wherein R' is R.

8. A composition as claimed in claim 6 or 7, wherein R is tert.butyl.

9. A process for stabilizing a linear alternating copolymer of carbon monoxide and at least one ethylenically unsaturated compound against degradation caused by exposure to UV light by incorporating therein a stabilizer, characterized by incorporating therein a stabilizing quantity of a mixture of (a) a diphenylamine and/or a thiobisphenol, and (b) a weakly acidic channel-type carbon black.

## Patentansprüche

1. Polyketonpolymerzusammensetzung, die ein lineares alternierendes Copolymer von Kohlenmonoxid und mindestens einer ethylenisch ungesättigten Verbindung und eine stabilisierende Menge eines Gemischs aus (a) einem Diphenylamin und/oder einem Thiobisphenol, und (b) einem schwach sauren Ruß von Kanaltyp mit einem pH-Wert oberhalb 3 umfaßt.

2. Eine Zusammensetzung wie in Anspruch 1 beansprucht, wobei das Polymer durch die sich wiederholende Formel 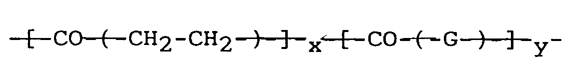 dargestellt wird, in der G der Anteil eines ethylenisch ungesättigten Kohlenwasserstoffs von mindestens 3 Kohlenstoffatomen ist, polymerisiert durch die ethylenische Ungesättigtheit, und wobei das Verhältnis von y:x nicht größer als 0,5 ist.

3. Eine Zusammensetzung, wie in Anspruch 1 oder 2 beansprucht, wobei das Diphenylamin und/oder Thiobisphenol in einer Menge von 0,05 Gew.% bis 5 Gew.% vorliegt, bezogen auf das zu stabilisierende Polymer.

4. Eine Zusammensetzung, wie in irgendeinem der Ansprüche 1 bis 3 beansprucht, wobei der Ruß einen pH-Wert von 3,5 bis 6,5 hat und der Ruß in einer Menge von 0,5 bis 10 Gew.% vorliegt, bezogen auf das zu stabilisierende Polymer.

5. Eine Zusammensetzung wie in irgendeinem der Ansprüche 1 bis 4 beansprucht, wobei das Diphenylamin 4,4'-Bis-(α,α-dimethylbenzyl)diphenylamin ist.

6. Eine Zusammensetzung wie in irgendeinem der Ansprüche 1 bis 5 beansprucht, wobei das Thiobisphenol die Formel 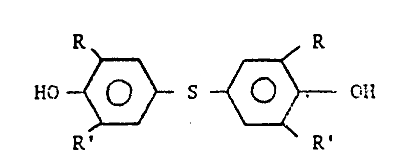 hat, in der R unabhängig voneinander sekundäres oder tertiäres Alkyl mit 3 bis 8 Kohlenstoffatomen einschließlich ist und R' unabhängig voneinander Alkyl mit bis zu 8 Kohlenstoffatomen einschließlich ist.

7. Eine Zusammensetzung wie in Anspruch 6 beansprucht, wobei R' gleich R ist.

8. Eine Zusammensetzung wie in Anspruch 6 oder 7 beansprucht, wobei R tert.-Butyl ist.

9. Ein Verfahren zum Stabilisieren eines linearen alternierenden Copolymers von Kohlenmonoxid und mindestens einer ethylenisch ungesättigten Verbindung gegen Abbau, der durch UV-Licht-Aussetzen verursacht ist, durch Einarbeiten eines Stabilisators, gekennzeichnet durch Einarbeiten einer stabilisierenden Menge von (a) einem Diphenylamin und/oder einem Thiobisphenol und (b) einem schwach sauren Ruß vom Kanaltyp.

## Revendications

1. Composition de polymère de polycétone, qui comprend un copolymère linéaire alterné d'oxyde de carbone et d'au moins un composé éthyléniquement insaturé, et une quantité stabilisante d'un mélange de (a) une diphénylamine et/ou un thiobisphénol, et (b) un noir de carbone du type au tunnel faiblement acide, ayant un pH au-dessus de 3.

2. Une composition selon la revendication 1, dans laquelle le polymère est représenté par la formule périodique 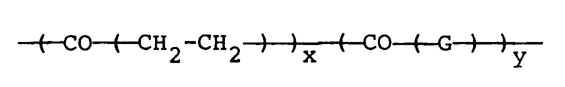 dans laquelle G est la portion d'un hydrocarbure éthyléniquement insaturé d'au moins 3 atomes de carbone polymérisé grâce à l'insaturation éthylénique et le rapport de y:x n'est pas supérieur à 0,5.

3. Une composition selon la revendication 1 ou 2, dans laquelle le composant diphénylamine et/ou thiobisphénol est présent à raison de 0,05 % en poids à 5 % en poids par rapport au polymère à stabiliser.

4. Une composition selon l'une quelconque des revendications 1-3, dans laquelle le noir de carbone a un pH compris entre 3,5 et 6,5 et le noir de carbone est présent à raison de 0,5 % à 10 % en poids, par rapport au polymère à stabiliser.

5. Une composition selon l'une quelconque des revendications 1-4, dans laquelle la diphénylamine est une 4,4'-bis(alpha,alpha-diméthylbenzyl)diphénylamine.

6. Une composition selon l'une quelconque des revendications 1-5, dans laquelle le thiobisphénol est de la formule 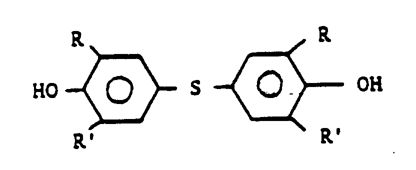 dans laquelle chaque R indépendamment est un groupe alcoyle secondaire ou tertiaire ayant de 3 à 8 atomes de carbone inclusivement et chaque R' indépendamment est un groupe alcoyle ayant jusqu'à 8 atomes de carbone inclusivement.

7. Une composition selon la revendication 6, dans laquelle R¹ est R.

8. Une composition selon la revendication 6 ou 7, dans laquelle R est un groupe tert-butyle.

9. Un procédé pour stabiliser un copolymère linéaire alterné d'oxyde de carbone et d'au moins un composé éthyléniquement insaturé contre la dégradation causée par l'exposition au rayonnement ultraviolet en y incorporant un stabilisant, caractérisé en ce qu'on incorpore dans le copolymère une quantité stabilisante d'un mélange de (a) une diphénylamine et/ou un thiobisphénol et (b) un noir de carbone du type au tunnel faiblement acide.
